# FASCICULE DE BREVET EUROPEEN

(11) **EP 2 033 838 B1**
(45) Date de publication et mention de la délivrance du brevet: **15.09.2010**
(21) Numéro de dépôt: 08305434.6
(22) Date de dépôt: 30.07.2008
(51) Int. Cl.: B60N 2/015

(54) **Dispositif d'articulation d'un siege arriere sur un plancher de vehicule automobile**
Gelenkvorrichtung zur Verstellung eines Rücksitzes auf dem Boden eines Kraftfahrzeugs
Articulation device of a back seat on an automobile floor pan.

(30) Priorité: 23.08.2007 FR 0757142
(43) Date de publication de la demande: 11.03.2009
(73) Titulaire: PEUGEOT CITROËN AUTOMOBILES SA, 78140 Vélizy Villacoublay (FR)
(72) Inventeur: Blaise, Vincent, 25260, LOUGRE (FR)

(56) Documents cités:
- DE-A1- 10 047 956
- DE-A1- 10 353 449
- FR-A- 2 812 250
- FR-A- 2 863 217
- GB-A- 1 170 563
- US-A- 1 368 397

## Description

La présente invention concerne un dispositif d'articulation d'une assise d'un siège arrière sur un plancher de véhicule automobile, ainsi qu'un véhicule automobile comportant au moins une assise d'un siège arrière équipée d'au moins d'un tel dispositif d'articulation.

Certains véhicules automobiles comportent avantageusement, pour augmenter le volume de chargement et adapter ce volume de chargement en fonction du nombre de passagers transportés, un ou plusieurs siège(s) arrière dont les dossiers et les assises peuvent être rabattus. A cet effet, l'assise de ce siège arrière comporte un dispositif d'articulation qui utilise une ou plusieurs charnière(s) fixée(s) sur la partie avant du sous-bassement de l'assise et sur le plancher du véhicule afin de permettre à cette assise de pivoter selon un mouvement circulaire centré sur la ou les charnière(s).

Le document FR2863217 décrit un dispositif de fixation d'une assise permettant soit un montage avec cinématique de basculement de l'assise, soit un montage fixe de l'assise sur le plancher par l'ajout d'une charnière intermédiaire fixe.

Mais, selon le type de véhicule et selon la modularité, les cinématiques du pivotement des assises ne sont pas les mêmes.

En effet, et à titre d'exemple, pour certains véhicules les assises basculent derrière la rangée de sièges avant dans une position sensiblement verticale et pour d'autres véhicules, les assises basculent à l'intérieur du plancher dans une position sensiblement horizontale de telle sorte que ce plancher présente une surface plane quand les assises sont complètement basculées et quand les dossiers sont rabattus.

Ainsi, en fonction de la cinématique, les positions des axes d'articulation des dispositifs d'articulation sont différentes, ce qui oblige les constructeurs de véhicules automobiles à prévoir une multitude de dispositifs d'articulation augmentant, de ce fait, les coûts.

L'invention a pour but de proposer un dispositif d'articulation d'une assise d'un siège arrière qui permet une communauté de pièces entre différents véhicules.

L'invention a donc pour objet un dispositif d'articulations d'une assise d'un siège arrière sur un plancher de véhicule automobile, du type comprenant un charnon fixe solidaire du plancher du véhicule et un charnon mobile solidaire de l'assise, lesdits charnons étant munis chacun d'un gond de réception d'un axe d'articulation s'étendant transversalement par rapport à l'axe longitudinal du véhicule, caractérisé en ce que le charnon fixe comprend une plaque formant un renfort de plancher et comportant des moyens de positionnement et de fixation d'un charnon fixe intermédiaire sur ladite plaque, muni d'un gond de réception dudit axe d'articulation, la position de ce gond étant décalée par rapport à la position du gond du charnon fixe.

Selon d'autres caractéristiques de l'invention :
- le décalage du gond du charnon fixe intermédiaire par rapport au gond du charnon fixe est dirigé vers l'avant et vers le bas du véhicule,
- le charnon fixe intermédiaire comprend une plaque de forme sensiblement complémentaire à la forme de la plaque du charnon fixe,
- les moyens de positionnement du charnon fixe intermédiaire sur le charnon fixe sont formés, d'une part, par un bossage ménagé sur la plaque de ce charnon fixe et destiné à coopérer avec un logement sensiblement complémentaire ménagé dans la plaque du charnon fixe intermédiaire et, d'autre part, par le gond du charnon fixe destiné à coopérer avec un logement ménagé dans la plaque du charnon fixe intermédiaire,
- les moyens de fixation comprennent un écrou fixé sur le bossage de la plaque du charnon fixe et un organe de vissage destiné à coopérer avec ledit écrou pour maintenir la plaque du charnon fixe intermédiaire sur la plaque du charnon fixe, et
- la plaque du charnon fixe intermédiaire est en matière plastique.

L'invention a également pour objet un véhicule automobile, caractérisé en ce qu'il comporte au moins une assise d'une rangée de sièges arrière équipée d'au moins un dispositif d'articulation tel que précédemment mentionné.

Les caractéristiques et avantages de l'invention apparaîtront au cours de la description qui va suivre, donnée uniquement à titre d'exemple et faite en référence aux dessins annexés, sur lesquels :
- la Fig. 1 est une vue schématique de côté d'un siège arrière équipé d'un dispositif d'articulation conforme à l'invention,
- la Fig. 2 est une vue schématique en perspective d'un charnon fixe du dispositif d'articulation conforme à l'invention, et
- la Fig. 3 est une vue schématique en perspective du charnon fixe de la Fig. 2 muni d'un charnon intermédiaire fixe.

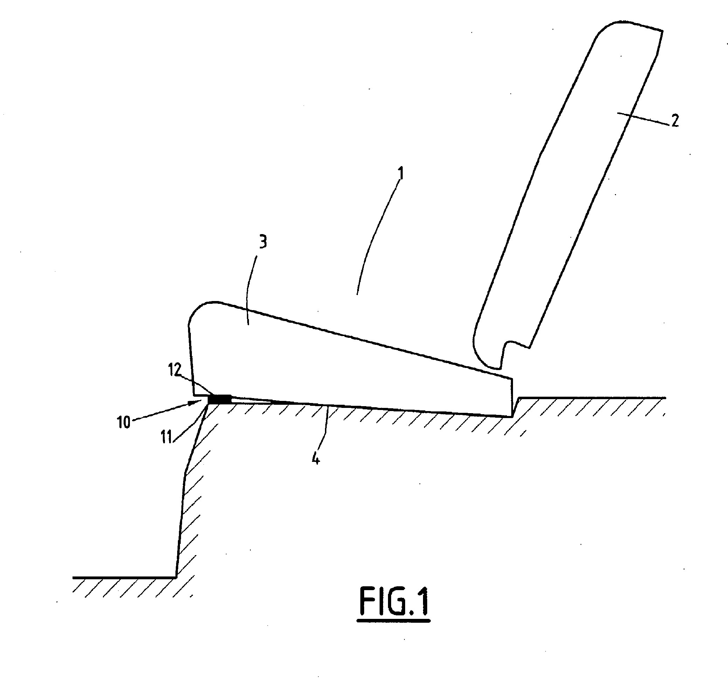

Sur la Fig. 1, on a représenté schématiquement un siège arrière 1 d'un véhicule automobile, qui se compose d'un dossier 2 basculant et d'une assise 3 pivotante de façon à augmenter le volume de chargement du véhicule.

L'assise 3 est montée pivotante sur le plancher 4 du véhicule au moyen d'un dispositif d'articulation désigné dans son ensemble par la référence 10.

Cette assise 3 bascule entre une première position sensiblement horizontale d'utilisation et une seconde position sensiblement horizontale escamotée dans un logement 5 ménagé dans le plancher 4.

Comme montré à la Fig. 1, le dispositif d'articulation comprend un charnon fixe 11 solidaire du plancher 4 du véhicule et un charnon mobile 12 solidaire de l'assise 3. Le charnon 11 est fixé sur le plancher 4 par exemple par soudage.

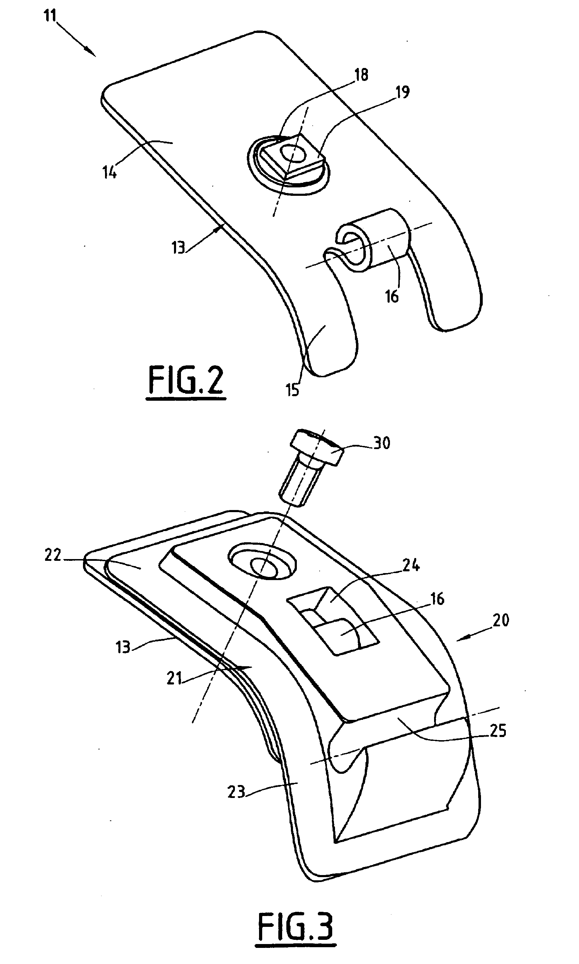

En se rapportant maintenant aux Fig. 2 et 3, on va décrire le charnon fixe 11.

Ce charnon fixe 11 est formé par une plaque désignée par la référence générale 13 comprenant une portion plane 14 prolongée à l'avant par une portion courbe 15 de façon à épouser la forme du plancher 4. La plaque 13 comporte un gond 16 destiné à coopérer avec un axe d'articulation, non représenté, s'étendant transversalement par rapport à l'axe longitudinal du véhicule. Cet axe d'articulation est porté par un gond, non représenté, solidaire du charnon mobile 12.

D'une manière générale, la plaque 13 du charnon fixe 11 comporte des moyens de positionnement et de fixation d'un charnon fixe intermédiaire 20 qui permet de décaler la position de l'axe d'articulation du dispositif d'articulation, comme on le verra ultérieurement.

Ainsi que montré à la Fig. 3, le charnon fixe intermédiaire 20 est également formé par une plaque 21 de forme sensiblement complémentaire à la forme de la plaque 13 du charnon fixe 11. La plaque 21 du charnon fixe intermédiaire 20 comporte une portion plane 22 et une portion courbe 23.

Les moyens de positionnement du charnon fixe intermédiaire 20 sur le charnon fixe 11 sont formés par un bossage 18 ménagé sur la face supérieure de la portion plane 14 de la plaque 13 et qui est destiné à coopérer avec un logement, non visible sur la figure 3, ménagé sur la face inférieure de la portion plane 22 de la plaque 21 du charnon fixe intermédiaire 20. Ce logement présente une forme sensiblement complémentaire à la forme du bossage 18.

Les moyens de positionnement du charnon fixe intermédiaire 20 sur le charnon fixe 11 sont aussi formés par le gond 16 de ce charnon fixe 11 qui est destiné à coopérer avec un logement 24 ménagé dans la plaque 21 dudit charnon fixe intermédiaire 20. Ce logement 24 présente une largeur sensiblement égale à la largeur du gond 16 du charnon fixe 11 de façon à bloquer tout déplacement transversal du charnon fixe intermédiaire 20 par rapport au charnon fixe 11.

Comme montré à la Fig. 3, la portion courbe 23 de la plaque 21 du charnon fixe intermédiaire 20 comporte un gond 25 dont la position est décalée par rapport à la position du gond 16 du charnon fixe 11. Le décalage du gond 25 du charnon fixe intermédiaire 20 par rapport au gond 16 du charnon fixe 11 est dirigé vers l'avant et vers le bas du véhicule.

A titre d'exemple, le décalage est de l'ordre de 19 mm vers le bas et de l'ordre de 26 mm vers l'avant du véhicule automobile.

Les moyens de fixation du charnon fixe intermédiaire 20 sur le charnon fixe 11 sont formés par un écrou 19 soudé sur le bossage 18 de la plaque 13 et par un organe de vissage 30 (Fig. 3) non représenté, destiné à coopérer avec ledit écrou 19 pour maintenir la plaque 21 du charnon fixe intermédiaire 20 sur la plaque 13 du charnon fixe 11.

L'ajout du charnon fixe intermédiaire 20 sur le charnon fixe 11 permet de décaler l'axe de rotation de l'assise 3 et ainsi d'obtenir une cinématique différente lors du pivotement de cette assise 3 par rapport au pivotement de ladite assise 3 avec uniquement le charnon fixe 11.

Ainsi, deux positions de l'axe de rotation sont possibles avec uniquement une pièce intermédiaire disposée sur le charnon fixe de base.

De préférence, le charnon fixe intermédiaire 20 est réalisé en matière plastique.

Le dispositif d'articulation selon l'invention permet donc d'obtenir plusieurs positions de l'axe de rotation de l'assise et permet surtout de garantir la communauté de pièces entre différents véhicules, diminuant d'autant les coûts.

## Revendications

1. Dispositif d'articulation d'une assise (3) d'un siège arrière (1) sur un plancher (4) de véhicule automobile, du type comprenant un charnon fixe (11) solidaire (11) du plancher (4) du véhicule et un charnon mobile (12) solidaire de l'assise (3), lesdits charnons (11, 12) étant munis chacun d'un gond de réception d'un axe d'articulation s'étendant transversalement par rapport à l'axe longitudinal du véhicule, **caractérisé en ce qu'**il comprend un charnon fixe intermédiaire (20) muni d'un gond (25) de réception dudit axe d'articulation et **en ce que** le charnon fixe (11) comprend une plaque (13) formant un renfort de plancher et comportant des moyens de positionnement (18, 16) et de fixation (19) du charnon fixe intermédiaire (20) sur ladite plaque (13), la position du gond (25) du charnon fixe intermédiaire (20) étant décalée par à rapport à la position du gond (16) du charnon fixe (11).

2. Dispositif selon la revendication 1, **caractérisé en ce que** le décalage du gond (25) du charnon fixe intermédiaire (20) par rapport au gond (16) du charnon fixe (11) et dirigé vers l'avant et vers le bas du véhicule.

3. Dispositif selon la revendication 1 ou 2, **caractérisé en ce que** le charnon fixe intermédiaire (20) comprend une plaque (21) de forme sensiblement complémentaire à la forme de la plaque (13) du charnon fixe (11).

4. Dispositif selon la revendication 3, **caractérisé en ce que** les moyens de positionnement du charnon fixe intermédiaire (20) sur le charnon fixe (11) sont formés, d'une part, par un bossage (18) ménagé sur la plaque (13) du charnon fixe (11) et destiné à coopérer avec un logement sensiblement complémentaire ménagé dans la plaque (21) du charnon fixe intermédiaire (20) et, d'autre part, par le gond (16) du charnon fixe (11) destiné à coopérer avec un logement (24) ménagé dans la plaque (21) du charnon fixe intermédiaire (20).

5. Dispositif selon la revendication 3 ou 4, **caractérisé en ce que** les moyens de fixation comprennent un écrou (19) fixé sur un bossage (18) de la plaque (13) du charnon fixe (11) et un organe de vissage (30) destiné à coopérer avec ledit écrou (19) pour maintenir la plaque (21) du charnon fixe intermédiaire (20) sur la plaque (13) du charnon fixe (11).

6. Dispositif selon l'une quelconque des revendications 3 à 5, **caractérisé en ce que** la plaque (21) du charnon fixe intermédiaire (20) est en matière plastique.

7. Véhicule automobile, **caractérisé en ce qu'**il comporte au moins une assise (3) d'une rangée de sièges arrière (1) équipée d'au moins un dispositif d'articulation (10) selon l'une quelconque des revendications précédentes.

8. Véhicule selon la revendication 7, **caractérisé en ce que** l'ajout du charnon fixe intermédiaire (20) sur le charnon fixe (11) permet de décaler l'axe de rotation de l'assise (3) et ainsi d'obtenir une cinématique différente lors du pivotement de cette assise (3) par rapport au pivotement de ladite assise (3) avec uniquement le charnon fixe (11).

## Claims

1. An articulation device of a seat pan (3) of a rear seat (1) on a floor (4) of an automobile vehicle, of the type comprising a fixed knuckle (11) integral (11) with the floor (4) of the vehicle and a movable knuckle (12) integral with the seat pan (3), the said knuckles (11, 12) being each provided with a receiving hinge of an articulation axis extending transversely with respect to the longitudinal axis of the vehicle, **characterized in that** it comprises an intermediate fixed knuckle (20) provided with a receiving hinge (25) of the said articulation axis and **in that** the fixed knuckle (11) comprises a plate (13) forming a floor reinforcement and comprising positioning means (18, 16) and fixing means (19) of the fixed intermediate knuckle (20) on the said plate (13), the position of the hinge (25) of the fixed intermediate knuckle (20) being staggered with respect to the position of the hinge (16) of the fixed knuckle (11).

2. The device according to Claim 1, **characterized in that** the staggering of the hinge (25) of the fixed intermediate knuckle (20) with respect to the hinge (16) of the fixed knuckle (11) is directed towards the front and towards the bottom of the vehicle.

3. The device according to Claim 1 or 2, **characterized in that** the fixed intermediate knuckle (20) comprises a plate (21) of a shape substantially complementary to the shape of the plate (13) of the fixed knuckle (11).

4. The device according to Claim 3, **characterized in that** the positioning means of the fixed intermediate knuckle (20) on the fixed knuckle (11) are formed, on the one hand, by a boss (18) arranged on the plate (13) of the fixed knuckle (11) and intended to cooperate with a substantially complementary housing arranged in the plate (21) of the fixed intermediate knuckle (20) and, on the other hand, by the hinge (16) of the fixed knuckle (11) intended to cooperate with a housing (24) arranged in the plate (21) of the fixed intermediate knuckle (20).

5. The device according to Claim 3 or 4, **characterized in that** the fixing means comprise a nut (19) fixed on a boss (18) of the plate (13) of the fixed knuckle (11) and a screwing member (30) intended to cooperate with the said nut (19) to hold the plate (21) of the fixed intermediate knuckle (20) on the plate (13) of the fixed knuckle (11).

6. The device according to any one of Claims 3 to 5, **characterized in that** the plate (21) of the fixed intermediate knuckle (20) is made of plastic material.

7. An automobile vehicle, **characterized in that** it comprises at least one seat pan (3) of a row of rear seats (1) equipped with at least one articulation device (10) according to any one of the preceding claims.

8. The vehicle according to Claim 7, **characterized in that** the addition of the fixed intermediate knuckle (20) on the fixed knuckle (11) allows the rotation axis of the seat pan (3) to be staggered and thus allows different kinematics to be obtained on pivoting of this seat pan (3) with respect to the pivoting of the said seat pan (3) with solely the fixed knuckle (11).

## Patentansprüche

1. Vorrichtung zum Anlenken einer Sitzfläche (3) eines Rücksitzes (1) an einem Fußboden (4) eines Kraftfahrzeugs, des Typs, der eine stationäre Scharnierhälfte (11), die fest (11) mit dem Boden (4) des Fahrzeugs verbunden ist, und eine bewegliche Scharnierhälfte (12), die fest mit der Sitzfläche (3) verbunden ist, aufweist, wobei die Scharnierhälften (11, 12) jeweils mit einer Aufnahmeangel einer Anlenkachse versehen sind, die sich quer in Bezug zu der Längsachse des Fahrzeugs erstreckt, **dadurch gekennzeichnet, dass** sie eine stationäre Zwischenscharnierhälfte (20) aufweist, die mit einer Aufnahmeangel (21) der Anlenkachse versehen ist, und dass die stationäre Scharnierhälfte (11) eine Platte (13) aufweist, die eine Fußbodenverstärkung bildet und Positioniermittel (18, 16) und Befestigungsmittel (19) der stationären Zwischenscharnierhälfte (20) auf der Platte (13) aufweist, wobei die Position der Angel (25) der stationären Zwischenscharnierhälfte (20) in Bezug zu der Position der Angel (16) der stationären Scharnierhälfte (11) versetzt ist.

2. Vorrichtung nach Anspruch 1, **dadurch gekennzeichnet, dass** der Versatz der Angel (25) der stationären Zwischenscharnierhälfte (20) in Bezug zu der Angel (16) der stationären Scharnierhälfte (11) zur Vorderseite und zur Unterseite des Fahrzeugs gerichtet ist.

3. Vorrichtung nach Anspruch 1 oder 2, **dadurch gekennzeichnet, dass** die stationäre Zwischenscharnierhälfte (20) eine Platte (21) mit im Wesentlichen komplementärer Form zu der Form der Platte (13) der stationären Scharnierhälfte (11) aufweist.

4. Vorrichtung nach Anspruch 3, **dadurch gekennzeichnet, dass** die Positioniermittel der stationären Zwischenscharnierhälfte (20) auf der stationären Scharnierhälfte (11) einerseits aus einem Höcker (18) gebildet sind, der auf der Platte (13) der stationären Scharnierhälfte (11) eingerichtet und dazu bestimmt ist, mit einer im Wesentlichen komplementären Aufnahme, die in der Platte (21) der stationären Zwischenscharnierhälfte (20) eingerichtet ist, zusammenzuwirken, und, andererseits, aus der Angel (16) der stationären Scharnierhälfte (11), die dazu bestimmt ist, mit einer Aufnahme (24), die in der Platte (21) der stationären Zwischenscharnierhälfte (20) eingerichtet ist, zusammenzuwirken.

5. Vorrichtung nach Anspruch 3 oder 4, **dadurch gekennzeichnet, dass** die Befestigungsmittel eine Mutter (19), die auf einem Höcker (18) der Platte (13) der stationären Scharnierhälfte (11) befestigt ist, und ein Schrauborgan (30) aufweisen, das dazu bestimmt ist, mit der Mutter (19) zusammenzuwirken, um die Platte (21) der stationären Zwischenscharnierhälfte (20) auf der Platte (13) der stationären Scharnierhälfte (11) zu halten.

6. Vorrichtung nach einem der Ansprüche 3 bis 5, **dadurch gekennzeichnet, dass** die Platte (21) der stationären Zwischenscharnierhälfte (20) aus Plastik besteht.

7. Kraftfahrzeug, **dadurch gekennzeichnet, dass** es mindestens eine Sitzfläche (3) einer Rücksitzreihe (1) aufweist, die mit mindestens einer Anlenkvorrichtung (10) nach einem der vorhergehenden Ansprüche ausgerüstet ist.

8. Kraftfahrzeug nach Anspruch 7, **dadurch gekennzeichnet, dass** das Hinzufügen der stationären Zwischenscharnierhälfte (20) auf der stationären Scharnierhälfte (11) es erlaubt, die Drehachse der Sitzfläche (3) zu verlagern und daher eine unterschiedliche Kinematik beim Schwenken dieser Sitzfläche (3) im Vergleich zu dem Schwenken der Sitzfläche (3) nur mit der stationären Scharnierhälfte (11) zu erzielen.
